# FASCICULE DE BREVET EUROPEEN

(11) **EP 1 123 661 B1**
(45) Date de publication et mention de la délivrance du brevet: **24.11.2004**
(21) Numéro de dépôt: 01400300.8
(22) Date de dépôt: 07.02.2001
(51) Int. Cl.: A23L 1/30, A23K 1/16, C08B 30/10

(54) **Composition azotée à base de gluten de blé**
Stickstoff enthaltende Zusammensetzung basierend auf Weizengluten
Nitrogen containing composition on the basis of wheat gluten

(30) Priorité: 11.02.2000 FR 0001737
(43) Date de publication de la demande: 16.08.2001
(73) Titulaire: Roquette Frères, 62136 Lestrem (FR)
(72) Inventeur: Erpicum, Thomas, Seraing, Liège 4100 (BE); Saniez, Marie-Hélène, 59350 Saint Andre (FR)
(74) Mandataire: Boulinguiez, Didier

(56) Documents cités:
- EP-A- 0 041 894
- US-A- 4 179 525
- US-A- 5 962 254
- BEROT, S. ET AL.: "Protéines Végétales." 1997 , LAVOISIER TEC & DOC, 1996. , PARIS, FRANCE XP002150422 22397 ISBN: 2-7430-0110-0 * page 152 - page 156 *
- HUDSON, J.B.F.: "Developments in Food Proteins." 1984 , ELSEVIER APPLIED SCIENCE PUBL. , LONDON, GB XP002150423 12288 * page 43 - page 44 * * page 64 *

## Description

La présente invention a pour objet une nouvelle composition azotée à base de gluten de blé.

Plus particulièrement, l'invention concerne une composition à base de gluten de blé vital dont la fonctionnalité est améliorée par rapport aux compositions de gluten vital connues dans l'art antérieur.

Le gluten de blé est un ingrédient de choix dans de nombreuses applications, et notamment en panification, dans la préparation de pâtes, de sauces et dans les préparations à base de viande.

Par le terme « vital », on désigne dans la présente invention un gluten de blé natif, en poudre, non hydrolysé ni solubilisé.

Le gluten de blé est la partie protéique issue du blé qui s'isole par lixiviation de la farine, c'est-à-dire par lavage à l'eau d'une pâte formée de farine et d'eau. Le gluten, appelé à ce stade « gluten vert », est un produit présentant des caractéristiques de viscoélasticité uniques. Le gluten de blé vital se présente sous forme de poudre couleur crème, à haute teneur en protéines (75 à 80%), obtenue par séchage contrôlé. Lorsqu'il est réhydraté, le gluten vital retrouve ses caractéristiques viscoélastiques initiales. Il contient également 6 à 8% de phospholipides, environ 10% d'amidon résiduel, environ 1% de cendres et 4 à 6% d'eau. Il est insoluble dans des solutions aqueuses au voisinage de la neutralité (pH 4 à 8). Cette poudre a tendance à s'agglomérer en une masse viscoélastique unique, en raison de sa forte hygroscopicité. Cette tendance est particulièrement indésirable dans toutes les applications nécessitant la dispersion du gluten dans des milieux aqueux, les grumeaux formés étant très difficiles à réduire et à disperser correctement.

En particulier, dans les industries de la fermentation, le gluten de blé vital est très difficile à mettre en oeuvre dans un fermenteur, pour les raisons exposées précédemment. Ceci constitue donc un frein à son utilisation dans ce domaine, alors qu'il pourrait constituer une source protéique végétale très intéressante, par rapport aux autres sources actuellement utilisées telles que les farines de coton ou les farines de soja. En effet, outre le coût de ces dernières, leur teneur élevée en débris cellulaires (environ 20%) et notamment en cellulose constitue un inconvénient pour les industries de la fermentation, qui recherchent des puretés et des bio-disponibilités maximales pour les substrats nutritifs qu'elles mettent en oeuvre. Le gluten vital, compte tenu du fait qu'il n'est pas hydrolysé constitue une source d'acides aminés et de peptides à libération progressive dans le milieu de fermentation, ce qui est particulièrement intéressant à certains stades de production de métabolites.

Des solutions ont été proposées comme notamment l'émulsification du gluten dans une huile minérale ou végétale en présence d'un émulsifiant (US 4.396.637) mais la composition obtenue n'est pas adaptée à une utilisation dans un milieu de fermentation.

Le brevet US 3.704.131 décrit une méthode sophistiquée de séchage de gluten sur lit fluidisé puis par atomisation.

Après avoir démontré que la dispersion du gluten dans des solutions d'acides faibles tels que l'acide lactique, propionique, acétique, citrique, n'était pas satisfaisante en raison de la mauvaise qualité du gluten obtenu, les titulaires du brevet CA 571.316 ont proposé un traitement du gluten au dioxyde de carbone sous hautes pressions préalablement à un séchage par atomisation.

Il a été enfin proposé dans le brevet US 4.179.525 de disperser du gluten de blé de fine granulométrie (inférieure à 350µm et de préférence égale à 150µm) à l'aide d'un additif de fine granulométrie également, constitué par une protéine globulaire non dénaturée, comme notamment une farine de soja. Les proportions idéales de farine de soja préconisées sont comprises entre 3 et 15% en poids par rapport au poids de gluten, et cette solution ne donne des résultats satisfaisants que pour de très fines granulométries et uniquement avec un additif protéique globulaire non dénaturé.

La farine de soja n'est pas un substrat idéal pour les milieux de fermentation en raison de sa contamination bactérienne souvent élevée, et de la difficulté à stériliser un tel produit riche en amidon. La farine de soja contient en effet environ 12% d'amidon. Elle présente en outre des traces de solvant résultant de l'extraction de l'huile de soja, et contient des facteurs anti-protéasiques pouvant être gênants.

On connaît en outre des compositions à base de gluten de blé et d'eau de trempe de maïs telles que celles décrites dans le brevet US 5,962,254 dont la Demanderesse est titulaire. Le gluten de blé se trouve en fait hydrolysé par l'eau de trempe et on obtient une composition de protéines hydrolysées, de bas poids moléculaire.

Il existait donc un besoin non satisfait pour une composition de gluten de blé vital, dispersible en milieu aqueux et notamment utilisable pour la préparation de milieux de fermentation, en substitution des farines de soja et de coton, ou des extraits de levure.

Et la Demanderesse a constaté, après avoir mené une recherche approfondie sur le sujet, que ce but pouvait être atteint en incorporant du corn-steep à du gluten de blé, tous deux étant sous forme de poudre. La composition azotée obtenue est, de manière surprenante et inattendue, très facilement dispersible dans l'eau, et constitue notamment un substrat de choix pour la fermentation.

L'invention se rapporte donc à une composition azotée à base de gluten de blé vital, dispersible en milieu aqueux, caractérisée en ce qu'elle contient du corn-steep en poudre. Le corn-steep, qui est obtenu par évaporation de l'eau de trempe issue de l'amidonnerie de maïs, est connu pour être une source d'azote très intéressante dans les industries de fermentation. Il est utilisé dans la plupart des productions biologiques, d'antibiotiques, de vitamines, d'acides organiques, d'enzymes. Il est également utilisé dans la production de biomasse. Le principal intérêt du corn-steep tient à sa composition particulière due au transfert et à la transformation par fermentation lactique des matières solubles contenues dans les grains de maïs.

La Demanderesse a découvert que son incorporation à l'état de poudre à du gluten de blé vital constituait un prémix se dispersant aisément en solution aqueuse et que le gluten de blé mis en solution de cette manière perdait, contre toute attente, sa faculté à se réagglomérer en une masse viscoélastique unique.

On dispose ainsi d'une composition azotée équilibrée, contenant des protéines de haut poids moléculaire, particulièrement intéressantes pour la libération lente de peptides et d'acides aminés dans un milieu de fermentation. Cette composition azotée est en effet avantageusement utilisée comme « forme retard », permettant la libération progressive d'acides aminés utiles pour la production de biomasse, les protéines permettant la production de métabolites.

Plus particulièrement, la composition azotée selon l'invention comprend au moins 20% de corn-steep en poudre, ce pourcentage étant exprimé en poids par rapport au poids de gluten vital. Une telle proportion est nécessaire pour obtenir une dispersion satisfaisante du gluten de blé.

Par corn-steep en poudre, on désigne par exemple le corn-steep commercialisé par la demanderesse sous le nom de marque SOLULYS® AST, ou encore le corn-steep pulvérulent tel que décrit dans la demande de brevet déposée par la demanderesse sous le numéro FR 99.04392.

En ce qui concerne le gluten de blé vital, on peut avantageusement utiliser le produit commercialisé par la demanderesse sous l'appellation VITEN®.

Pour préparer la composition selon l'invention, on procède simplement à un mélange des deux poudres choisies. On peut également envisager un co-séchage du gluten et du corn-steep afin d'obtenir un mélange en poudre. En ce qui concerne la granulométrie de la composition selon l'invention, environ 60% des particules ont une taille supérieure à 50 microns, et environ 1% des particules ont une taille supérieure à 200 microns.

D'autre part, la masse volumique apparente de la composition selon l'invention est voisine de 0.5 kg par litre.

Selon une variante préférée de l'invention, la composition azotée selon l'invention comprend 20 à 80%, de préférence 25 à 75% en poids de corn-steep en poudre, ces pourcentages étant exprimés par rapport au poids de gluten de blé vital. En fonction des applications recherchées, il est en effet possible d'effectuer des mélanges dans différentes proportions gluten/corn-steep selon que l'on recherche une composition contenant des protéines de haut poids moléculaire ou plutôt une composition renfermant davantage de peptides et d'acides aminés.

La composition azotée selon l'invention se caractérise également par une teneur en proline libre comprise entre 200 et 1000mg/100g sec, une teneur en alanine libre comprise entre 500 et 1500mg/100g sec, et une teneur en leucine libre comprise entre 400 et 1200mg/100g sec. Ces acides aminés libres sont mesurés dans la composition selon les techniques chromatographiques couramment utilisées à cette fin.

La composition azotée comprend, conformément à l'invention, de l'acide lactique provenant notamment du corn-steep. Elle se caractérise en particulier par une teneur en acide lactique supérieure ou égale à 3% en poids sur sec. L'acide lactique est dosé par pH-métrie selon la méthode suivante :

Dans un bécher de 100ml, on introduit environ 50 ml d'eau distillée. Sous agitation, on introduit une prise d'essai d'environ 5g, exactement pesée, de l'échantillon à analyser. Cette solution est transvasée dans une fiole jaugée de 100ml, ajustée avec de l'eau distillée, puis laissée sous agitation 30 minutes.

On prélève ensuite 20ml de cette solution que l'on introduit dans un bécher de 250ml. On ajoute environ 70ml d'eau distillée et on amène sous contrôle phmétrique le pH à 8 avec de la soude 0.1N.

La quantité d'acide lactique est exprimé selon la formule suivante : % acide lactique en poids sur sec = V/P * 9/2, où V est le volume de soude versée en ml et P le poids de la prise d'essai en g.

La composition selon l'invention se caractérise enfin par une teneur en phosphore total supérieure ou égale à 1% en poids sur sec. Le dosage du phosphore total est réalisé selon la norme ISO 3946, qui repose sur la destruction des matières organiques du produit à doser de manière à transformer tout le phosphore organique en phosphore minéral, par minéralisation à l'aide d'un mélange sulfonitrique et transformation des phosphates en orthophosphates. Les étapes suivantes consistent à former un complexe molybdique puis à mesurer l'absorbance à une longueur d'onde de 825 nm.

Grâce à ses caractéristiques particulières, la composition azotée selon l'invention présente un intérêt certain à être utilisée comme substrat de croissance microbienne dans les industries de fermentation. Elle donne en effet d'excellents résultats pour la production de biomasse, résultats nettement supérieurs aux substrats azotés habituels tels que notamment les farines de soja ou de coton. Elle est également particulièrement indiquée dans la préparation d'antibiotiques tels que notamment les céphalosporines ou pénicillines. Elle peut en outre intéresser l'industrie alimentaire pour ses propriétés nutritionnelles et aromatiques, on l'utilisera alors dans des compositions destinées à l'alimentation humaine ou animale.

La composition selon l'invention peut en outre contenir divers additifs et excipients comme par exemple des minéraux, vitamines, acides aminés, conservateurs, colorants ou autres nutriments pouvant supplémenter ladite composition en vue notamment d'une utilisation comme source azotée en milieux de fermentation.

D'autres caractéristiques et avantages de la présente invention apparaîtront clairement à la lecture des exemples donnés ci-après qui viennent illustrer l'invention sans toutefois la limiter.

### Exemple 1

Du gluten vital (VITEN® ) et du gluten soluble hydrolysé enzymatiquement(VITEN®CWS), sont comparés à trois mélanges de gluten vital et de corn-steep atomisé (SOLULYS® AST) selon l'invention, en ce qui concerne leur dispersibilité dans l'eau. On prépare trois compositions selon l'invention, A, B et C contenant respectivement des ratios corn-steep/gluten de 1/1, 1/3 et 1/4, soient 50, 25 et 20% de corn-steep par rapport au gluten.

On procède ensuite à la mise en solution dans l'eau de 300 grammes de ces différentes compositions, à une matière sèche de 15%, et on filtre immédiatement les solutions obtenues sur un tamis de 1000 microns. Le résidu laissé sur le tamis est pesé et constitue la première masse m1. La préparation est ensuite laissée au repos 1 heure avant d'être à nouveau filtrée. Le résidu pesé constitue la deuxième masse m2. Plus le résidu ml est important, moins la dispersibilité du produit est bonne. Plus le résidu m2 est important, moins la dispersibilité du produit est stable dans le temps.

Ces opérations sont répétées pour les différentes compositions à évaluer.

Les résultats sont repris dans le tableau ci-dessous:

| **Composition Testée** | **Rapport m1/m2** **(en g avant et après** **filtration)** |
|---|---|
| VITEN® | 152/9.2 |
| VITEN®CWS | 7.9/16 |
| A (1/1) | 2/0.9 |
| B (1/3) | 7/11.5 |
| C (1/4) | 28/19 |

Le gluten vital mis seul en solution dans l'eau donne une masse viscoélastique difficile à mélanger, ce qui explique le résidu important ml obtenu après filtration.

Les compositions A, B et C donnent des résultats très satisfaisants : on obtient une très bonne dispersibilité du gluten vital, équivalente à la dispersibilité d'un gluten ayant subi une hydrolyse enzymatique (VITEN®CWS). Cette dispersibilité est stable au cours du temps, comme le montrent les résidus m2 qui sont relativement faibles.

En deçà de 20% de corn-steep, il devient impossible de disperser correctement la composition qui retrouve alors le comportement caractéristique du gluten de blé vital utilisé seul.

### Exemple 2

On utilise la composition A selon l'invention, préparée précédemment avec 50% de gluten vital et 50% de corn-steep en poudre.

*Lactobacillus plantarum* ATCC 8014 est cultivé en Erlenmeyer de 100ml contenant 50 ml d'un milieu nutritif liquide composé de glucose à 10 g/l, de CaCO₃ à 2 g/l et de source azotée à 0.1 g/l d'azote total.

Ce milieu est ensemencé à 2% par une préculture composée de glucose à 10 g/l, de CaCO₃ à 2 g/l et d'extrait de levure à 2 g/l.

Ce milieu de préculture est ensemencé par un carré d'une culture gélosée de la souche obtenue après 24 heures d'incubation à 45°C.

La préculture est incubée 24 heures à 45°C sous une agitation rotative de 80 rpm. Après ensemencement à 2% du milieu de production, celui-ci est mis à incuber à son tour 24 heures dans les mêmes conditions que la préculture.

Des échantillons sont prélevés en cinétique afin d'en évaluer la viabilité cellulaire par analyse en cytométrie de flux. Cette technique permet l'analyse de plusieurs caractéristiques cellulaires permettant par exemple de différencier simultanément dans une population cellulaire donnée les micro-organismes viables de ceux non viables et de les dénombrer avec exactitude. Ce dénombrement est effectué par la mesure de la fluorescence émise par les microorganismes marqués au préalable avec des fluorochromes particuliers grâce à un cytomètre de flux, comme le CHEM FLOW® Autosystem à détection laser commercialisé par la société CHEMUNEX. La méthode comprend trois phases, consistant dans un premier temps à marquer les microorganismes viables en leur faisant assimiler un substrat non fluorescent capable de traverser leur membrane cellulaire. Ce substrat non fluorescent est alors hydrolysé par les estérases de leur cytoplasme en un composé émettant une fluorescence verte et rouge lors d'une excitation laser. Seules les cellules viables sont ainsi marquées. La deuxième phase consiste dans le marquage des microorganismes non viables qui est effectué par un réactif spécifique de l'ADN qui émet une fluorescence rouge lors d'une excitation laser. La troisième phase consiste finalement en l'analyse de la suspension cellulaire dans l'analyseur du cytomètre de flux. Les microorganismes marqués émettent un signal fluorescent qui est analysé dans le vert et dans le rouge à l'aide de deux détecteurs très sensibles. Ainsi, le nombre total de microorganismes viables et non viables sera déterminé dans le rouge, tandis que le nombre des microorganismes viables sera déterminé à partir du signal fluorescent vert.

Après avoir prélevé une préparation cellulaire à tester, renfermant environ 5.10⁶ ufc/ml, on procède aux étapes suivantes :
- dans un tube de 3 ml, placer 100µl de la suspension cellulaire homogénéisée avec 900µl de la solution de marquage de viabilité commercialisée par la société CHEMUNEX,
- homogénéiser et incuber les tubes 10 min à 30°C,
- placer les tubes dans la glace et à l'obscurité pour arrêter la réaction.
- Dans un autre tube de 3 ml, placer 100 *µ*l de la suspension cellulaire homogénéisée avec 900 µl de la solution de marquage de mortalité,
- Homogénéiser et incuber les tubes 10 min dans la glace et à l'obscurité.

Les mesures sont ensuite réalisées sur un CHEM FLOW® Autosystem 3 de la manière suivante (après calibration à l'aide d'un standard spécialement mis au point pour l'analyse de suspensions de bactéries) :
- mélanger 150 µl de la suspension marquée avec le marquage de viabilité et 150 µl de la suspension marquée avec le marquage de mortalité,
- ajouter 1.2 ml de réactif ChemSol B7 et effectuer la mesure sur 225µl.

L'appareil fournit une valeur de TC (ou total count) qui correspond au nombre total des évènements comptabilisés lors de l'analyse, et une valeur GC correspondant au nombre de cellules vivantes. Le pourcentage de viabilité sera déterminé par le rapport (GC/TC)*100. Les résultats sont exprimés en pourcentage de cellules vivantes parmi la population totale présente par millilitre de moût.

En tant que source azotée, on utilise la composition A, qui est comparée à la farine de soja et à la farine de coton.

Ces compositions azotées sont toutes trois utilisées à une concentration permettant d'apporter dans le milieu 0.1 g/l d'azote total.

Les trois milieux de culture sont ensemencés avec la même préculture afin de pouvoir comparer les résultats obtenus.

Les résultats sont repris dans le tableau ci-dessous :

| | **Population totale** (Ufc*) | **Population vivante** |
|---|---|---|
| **Composition A** | | 100% |
| 1.05 g/l | 4.5 10⁸ | |
| **Farine de soja** | | 94% |
| 1.2 g/l | 1.7 10⁸ | |
| **Farine de coton** | | 97% |
| 1.05 g/l | 1.6 10⁸ | |

| | | |
|---|---|---|
| *Ufc = unité formant colonie | | |

L'utilisation de la composition selon l'invention permet d'obtenir une population totale en *lactobacillus plantarum* 2.7 fois plus dense que celles obtenues avec les farines de soja et de coton.

### Exemple 3

*Saccharomyces cerevisiae* ATCC 18824 est cultivé en Erlenmeyer de 100 ml contenant 20 ml d'un milieu nutritif liquide composé de glucose à 10 g/l et de source azotée à 0.1 g/l d'azote total.

Ce milieu est ensemencé à 2% par une préculture composée de glucose à 10 g/l et d'extrait de levure à 2 g/l. Ce milieu de préculture est ensemencé par un carré d'une culture gélosée de la souche obtenue après 24 heures d'incubation à 37°C.

La préculture est incubée 24 heures à 37°C sous agitation rotative de 200 rpm.

Après ensemencement à 2% du milieu de production, celui-ci est mis à incuber à son tour 24 heures dans les mêmes conditions que la préculture.

Des échantillons sont prélevés en cinétique afin d'en évaluer la viabilité cellulaire par analyse en cytométrie de flux. Les résultats sont exprimés en pourcentage de cellules vivantes parmi la population totale présente par millilitre de moût. Les sources azotées étudiées sont la composition A, la farine de soja et la farine de coton. Elles sont toutes les trois utilisées à une concentration permettant d'apporter dans le milieu 0.1 g/l d'azote total. Les trois milieux de culture sont ensemencés avec la même préculture.

Les résultats obtenus sont repris dans le tableau ci-dessous :

| | **Population totale** **(ufc)** | **Population vivante** |
|---|---|---|
| **Composition A** | | 80% |
| 1.05 g/l | 9.4 10⁶ | |
| **Farine de soja** | | 78% |
| 1.2 g/l | 4.6 10⁶ | |
| **Farine de coton** | | 85% |
| 1.05 g/l | 5.7 10⁶ | |

L'utilisation de la composition selon l'invention permet d'obtenir une population totale et une population viable en *Saccharomyces cerevisiae* près de deux fois plus dense que celles obtenues avec les farines de soja et de coton.

### Exemple 4

*Bacillus subtilis* ATCC 6051a est cultivé en Erlenmeyer de 100 ml contenant 20 ml d'un milieu nutritif liquide composé de glucose à 10 g/l et de source azotée à 0.1 g/l d'azote total.

Ce milieu est ensemencé à 2% par une préculture composée de glucose à 10 g/l et d'extrait de levure à 2 g/l. Ce milieu de préculture est ensemencé par un carré d'une culture gélosée de la souche obtenue après 24 heures d'incubation à 30°C. La préculture est incubée 24 heures à 30°C sous agitation rotative de 200 rpm.

Après ensemencement à 2% du milieu de production, celui-ci est mis à incuber à son tour 24 heures dans les mêmes conditions que la préculture.

Des échantillons sont prélevés en cinétique afin d'en évaluer la viabilité cellulaire par analyse en cytométrie de flux. Les résultats sont exprimés en pourcentage de cellules vivantes parmi la population totale présente par millilitre de moût.

Les sources azotées étudiées sont la composition A, la farine de soja et la farine de coton. Elles sont toutes les trois utilisées à une concentration permettant d'apporter dans le milieu 0.1 g/l d'azote total. Les trois milieux de culture sont ensemencés avec la même préculture.

Les résultats obtenus sont repris dans le tableau ci-dessous :

| | **Population totale** **(ufc)** | **Population vivante** |
|---|---|---|
| **Composition A** | | 95% |
| 1.05 g/l | 2.1 10⁸ | |
| **Farine de soja** | | 35% |
| 1.2 g/l | 305 10⁶ | |
| **Farine de coton** | | 50% |
| 1.05 g/l | 1.5 10⁶ | |

L'utilisation de la composition selon l'invention permet d'obtenir une population totale en *Bacillus subtilis* extrêmement dense et parfaitement viable, ce que ne permettent pas les farines de soja et de coton.

Ces résultats illustrent la parfaite adéquation de cette nouvelle composition selon l'invention, comme source azotée pour la culture de *Bacillus subtilis.*

## Revendications

1. Composition azotée à base de gluten de blé vital, dispersible en milieu aqueux, **caractérisée en ce qu'**elle comprend du corn-steep en poudre.

2. Composition azotée selon la revendication 1, **caractérisée en ce qu'**elle comprend au moins 20% de corn-steep en poudre, ce pourcentage étant exprimé en poids par rapport au poids de gluten de blé vital.

3. Composition azotée selon l'une ou l'autre des revendications 1 et 2, **caractérisée en ce qu'**elle comprend 20 à 80%, de préférence 25 à 75% de corn-steep en poudre, ces pourcentages étant exprimés en poids par rapport au poids de gluten de blé vital.

4. Composition azotée selon l'une quelconque des revendications 1 à 3, **caractérisée en ce qu'**elle présente une teneur en proline libre comprise entre 200 et 1000mg/100g sec, une teneur en alanine libre comprise entre 500 et 1500 mg /100g sec et une teneur en leucine libre comprise entre 400 et 1200 mg /100g sec.

5. Composition azotée selon l'une quelconque des revendications 1 à 4, **caractérisée en ce qu'**elle comprend une teneur en acide lactique supérieure ou égale à 3% en poids sur sec.

6. Composition azotée selon l'une quelconque des revendications 1 à 5, **caractérisée en ce qu'**elle comprend une teneur en phosphore total supérieure ou égale à 1% en poids sur sec.

7. Procédé de préparation d'une composition azotée consistant à mélanger du gluten de blé vital et du corn-steep en poudre de manière à obtenir une composition dispersible en milieu aqueux, selon l'une quelconque des revendications 1 à 6.

8. Utilisation d'une composition selon l'une quelconque des revendications 1 à 6, ou susceptible d'être obtenue selon la revendication 7, comme substrat pour la production d'antibiotiques.

9. Utilisation d'une composition selon l'une quelconque des revendications 1 à 6 ou susceptible d'être obtenue selon la revendication 7, en tant qu'aliment ou additif alimentaire dans des compositions destinées à l'alimentation animale.

10. Utilisation d'une composition selon l'une quelconque des revendications 1 à 6 ou susceptible d'être obtenue selon la revendication 7, en tant qu'aliment ou additif alimentaire dans des compositions destinées à l'alimentation humaine.

## Patentansprüche

1. In wässrigem Medium dispergierbare, stickstoffhaltige Zusammensetzung auf der Grundlage von Vitalweizengluten, **dadurch gekennzeichnet, dass** sie Cornsteep in Pulverform enthält.

2. Stickstoffhaltige Zusammensetzung nach Anspruch 1, **dadurch gekennzeichnet, dass** sie mindestens 20 % Cornsteep-Pulver enthält, wobei dieser Prozentsatz in Gewicht, bezogen auf das Gewicht des Vitalweizenglutens, ausgedrückt ist.

3. Stickstoffhaltige Zusammensetzung nach einem der Ansprüche 1 und 2, **dadurch gekennzeichnet, dass** sie 20 bis 80 %, vorzugsweise 25 bis 75 % Cornsteep-Pulver enthält, wobei diese Prozentsätze in Gewicht, bezogen auf das Gewicht des Vitalweizenglutens, ausgedrückt sind.

4. Stickstoffhaltige Zusammensetzung nach einem der Ansprüche 1 bis 3, **dadurch gekennzeichnet, dass** sie einen Gehalt an freiem Prolin zwischen 200 und 1000 mg/100 g trocken, einen Gehalt an freiem Alanin zwischen 500 und 1500 mg/100 g trocken und einen Gehalt an freiem Leucin zwischen 400 und 1200 mg/100 g trocken besitzt.

5. Stickstoffhaltige Zusammensetzung nach einem der Ansprüche 1 bis 4, **dadurch gekennzeichnet, dass** sie einen Milchsäuregehalt von mehr als oder gleich 3 Gew.-% trocken besitzt.

6. Stickstoffhaltige Zusammensetzung nach einem der Ansprüche 1 bis 5, **dadurch gekennzeichnet, dass** sie einen Gesamtphosphorgehalt von mehr als oder gleich 1 Gew.-% trocken besitzt.

7. Verfahren zur Herstellung einer stickstoffhaltigen Zusammensetzung, das darin besteht, dass Vitalweizengluten und Cornsteep-Pulver so gemischt werden, dass man eine in wässrigem Medium dispergierbare Zusammensetzung nach einem der Ansprüche 1 bis 6 erhält.

8. Verwendung einer Zusammensetzung nach einem der Ansprüche 1 bis 6 oder einer gemäß Anspruch 7 herstellbaren Zusammensetzung als Substrat für die Herstellung von Antibiotika.

9. Verwendung einer Zusammensetzung nach einem der Ansprüche 1 bis 6 oder einer gemäß Anspruch 7 herstellbaren Zusammensetzung als Nahrungsmittel oder Nahrungsmittelzusatz in Tiernahrungszusammensetzungen.

10. Verwendung einer Zusammensetzung nach einem der Ansprüche 1 bis 6 oder einer gemäß Anspruch 7 herstellbaren Zusammensetzung als Nahrungsmittel oder Nahrungsmittelzusatz in Nahrungszusammensetzungen für Menschen.

## Claims

1. Nitrogenous composition based on vital wheat gluten, dispersible in aqueous medium, **characterised in that** it comprises powdered corn-steep.

2. Nitrogenous composition according to Claim 1, **characterised in that** it comprises at least 20% of powdered corn-steep, this percentage being expressed in weight by reference to the weight of vital wheat gluten.

3. Nitrogenous composition according to one or other of the Claims 1 and 2, **characterised in that** it comprises 20 to 80%, preferably 25 to 75% of powdered corn-steep, these percentages being expressed in weight by reference to the weight of vital wheat gluten.

4. Nitrogenous composition according to any of the Claims 1 to 3, **characterised in that** it has a free proline content lying between 200 and 1000 mg/100 g of dry matter, a free alanine content lying between 500 and 1500 mg/100 g of dry matter and a free leucine content lying between 400 and 1200 mg/100 g of dry matter.

5. Nitrogenous composition according to any of the Claims 1 to 4, **characterised in that** it has a lactic acid content greater than or equal to 3% by weight of dry matter.

6. Nitrogenous composition according to any of the Claims 1 to 5, **characterised in that** it has a total phosphorus content greater than or equal to 1% by weight of dry matter.

7. Method for preparing a nitrogenous composition consisting in mixing vital wheat gluten and powdered corn-steep in such a way as to obtain a composition dispersible in aqueous medium, according to any of the Claims 1 to 6.

8. Use of a composition according to any of the Claims 1 to 6, or obtainable according to Claim 7, as substrate for the production of antibiotics.

9. Use of a composition according to any of the Claims 1 to 6 or obtainable according to Claim 7, as food or food additive in compositions intended for animal feed.

10. Use of a composition according to any of the Claims 1 to 6 or obtainable according to Claim 7, as food or food additive in compositions intended for human food.
